# EUROPEAN PATENT APPLICATION

(11) **EP 4 125 300 A1**
(43) Date of publication of application: **01.02.2023**
(21) Application number: 21188006.7
(22) Date of filing: 27.07.2021
(51) Int. Cl.: H04W 76/27, H04W 28/14

(54) **RADIO COMMUNICATION SYSTEM AND METHOD FOR PROVIDING A COMMUNICATION SERVICE TO A MOBILE TERMINAL**

(71) Applicant: NTT DOCOMO, INC., Chiyoda-Ku Tokyo 100-6150 (JP)
(72) Inventor: SAMA, Malla Reddy, 80687 Munich (DE); THAKOLSRI, Srisakul, 80687 Munich (DE); MINOKUCHI, Atsushi, Tokyo, 100-6150 (JP); HIKOSAKA, Maoki, Tokyo, 100-6150 (JP)
(74) Representative: Viering, Jentschura & Partner mbB Patent- und Rechtsanwälte

(57) **Abstract**

According to an embodiment, a method for providing a communication service to a mobile terminal by a communication network is described comprising detecting that a mobile terminal is temporarily unreachable for the communication network due to the mobile terminal carrying out a predetermined data processing procedure, sending an indication that the mobile terminal is temporarily unreachable for the communication network in reaction to the detection to a component for providing a communication service and providing, in reaction to a reception of the indication, the communication service to the mobile terminal taking into account that the mobile terminal is temporarily unreachable for the communication network.

## Description

The present disclosure relates to communication systems and methods for providing a communication service to a mobile terminal.

In a mobile radio communication system it may occur that a mobile terminal becomes unavailable in the order of minutes, for instance, when it performs an upgrade such as an operating system (OS) update. The mobile terminal may then be unavailable (and thus unreachable for the network side) without, for example, an application server or core network having knowledge about it.

Furthermore, if a mobile terminal becomes unavailable in the order of minutes e.g. because of an operating system update, the communication system typically performs a detach (de-registration) procedure and releases all sessions (e.g. PDU (Packet Data Unit) sessions) of the mobile terminal. This may be triggered by the mobile terminal or the network side. This means that the mobile terminal and network release (delete) the mobility management (MM) and session management (SM) context and also IP (Internet Protocol) connectivity. When the mobile terminal becomes again available (e.g. has rebooted after and update), corresponding procedures need to be carried out to reestablish communication such as re-registration and re-establishment of sessions. This leads to a lot of signalling in the communication system

Accordingly, approaches are desirable which allow a better handling of temporal unavailability of mobile terminals.

According to an embodiment, a method for providing a communication service to a mobile terminal by a communication network is provided including detecting that a mobile terminal is temporarily unreachable for the communication network due to the mobile terminal carrying out a predetermined data processing procedure (e.g., operating system (OS) update, manual PLMN selection, etc.,), sending an indication that the mobile terminal is temporarily unreachable for the communication network in reaction to the detection to a component for providing a communication service and providing, in reaction to a reception of the indication, the communication service to the mobile terminal taking into account that the mobile terminal is temporarily unreachable for the communication network.

According to another embodiment, a (radio) communication system according to the method described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- FIG. 1: shows a radio communication system.
- FIG. 2: illustrates components involved in a detachment of a mobile terminal from a communication network.
- FIG. 3: shows a message flow diagram illustrating a soft detach of a mobile terminal from a communication network.
- FIG. 4: shows a flow diagram illustrating a method for providing a communication service to a mobile terminal by a communication network.
- FIG. 5: shows a radio communication system according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for providing a communication service to a mobile terminal by a communication network as described above.
Example 2 is the method of Example 1, wherein the indication is sent by the mobile terminal and the component for providing the communication service includes one or more core network components of the communication network
Example 3 is the method of Example 2, including sending the indication with a de-registration message and/or registration message.
Example 4 is the method of Example 2 or 3, wherein the core network component is an access and mobility management function and/or session management function and/or unified data management and/or policy control function and/or network exposure function and/or network data analytics function.
Example 5 is the method of Example 1, wherein the indication is sent by an access and mobility management function and/or network data analytics function and/or session management function and/or unified data management and/or policy control function and/or network exposure function of the communication network and the component for providing the communication service is an application function.
Example 6 is the method of any one of Examples 1 to 5, wherein the indication includes the specification of a cause why the mobile terminal is temporarily unreachable for the communication network.
Example 7 is the method of any one of Examples 1 to 6, wherein the indication includes the specification of a maximum duration for which the mobile terminal is unreachable for the communication network and wherein the communication service is provided to the mobile terminal taking into account the maximum duration.
Example 8 is the method of Example 7, including estimating the maximum duration by network analytics.
Example 9 is the method of any one of Examples 1 to 8, wherein the predetermined data processing procedure is a software update of the mobile terminal and/or public land mobile network selection and/or re-registration of the mobile terminal in the communication network.
Example 10 is the method of any one of Examples 1 to 9, wherein the communication service includes the provision of one or more communication sessions to the mobile terminal.
Example 11 is the method of Example 10, wherein providing a communication service to the mobile terminal taking into account that the mobile terminal is temporarily unreachable for the communication network includes keeping one or more communication sessions established that have been established before the mobile terminal becomes temporarily unreachable and providing the kept one or more communication sessions to the mobile terminal when the mobile terminal is again reachable.
Example 12 is the method of any one of Examples 1 to 11, wherein the communication service includes the provision of downlink and uplink data to the mobile terminal.
Example 13 is the method of Example 12, wherein providing a communication service to the mobile terminal taking into account that the mobile terminal is temporarily unreachable for the communication network includes initiating buffering downlink data until the mobile terminal is again reachable and initiating transmission of the buffered downlink data when the mobile terminal has again become reachable.
Example 14 is the method of any one of Examples 1 to 13, wherein providing a communication service to the mobile terminal taking into account that the mobile terminal is temporarily unreachable for the communication network includes keeping a mobility management context, a session management context or both of the mobile terminal.
Example 15 is the method of any one of Examples 1 to 14, further including sending the mobility management context, session management context or both to the mobile terminal when the mobile terminal is again reachable for the communication network.
Example 16 is a radio communication system including a first communication system component configured to detect that a mobile terminal is temporarily unreachable for a communication network of the radio communication system due to the mobile terminal carrying out a predetermined data processing procedure and a second communication system component, wherein the first communication system component is configured to send an indication that the mobile terminal is temporarily unreachable for the communication network in reaction to the detection to the second communication system component and the second communication system component is configured to provide, in reaction to a reception of the indication, a communication service to the mobile terminal taking into account that the mobile terminal is temporarily unreachable for the communication network.
Example 17 is the communication system of Example 16, wherein the first communication system component is the mobile terminal and the second communication system component is a component of a core network of the communication system.
Example 18 is the communication system of Example 17, wherein the component of the core network is an access and mobility management function.
Example 19 is the communication system of Example 18, wherein the first communication system component is an access and mobility management function and the second communication system component is an application function.

It should be noted that one or more of the features of any of the examples above may be combined with any one of the other examples. In particular, the Examples described in context of the method are analogously valid for the radio communication system and vice versa.

According to further embodiments, a computer program and a computer readable medium including instructions, which, when executed by a computer, make the computer perform the method of any one of the above Examples are provided.

In the following, various examples will be described in more detail.

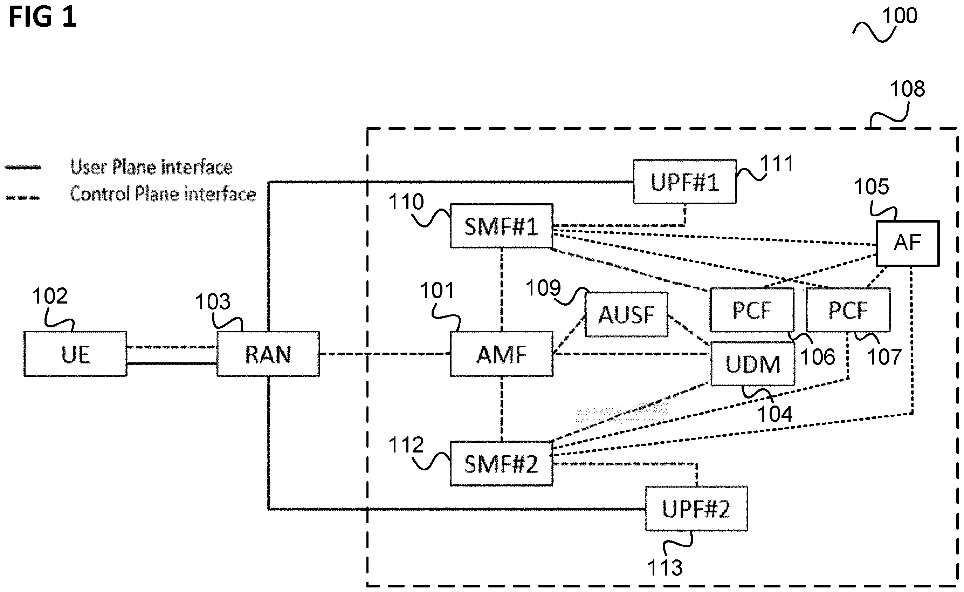

FIG. 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another wireless communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100). In this case, all communication between the core network functions and AF (and vice versa) takes place via NEF.

The AF 105 enables an application to request the 5G system 100 to support specific QoS (Quality of Service) policies for a UE 102 that establishes a PDU session to provide a communication service for that application.

The SMFs 110, 112 are for handling PDU (Protocol Data Unit) sessions, i.e. for creating, updating and removing PDU sessions and managing session context with the User Plane Function (UPF).

The RAN 103 and the core network 108 form the network side of the mobile radio communication system, or, in other words, form the (mobile radio) communication network. The mobile radio communication network and the mobile terminals accessing the mobile radio communication network form, together, the mobile radio communication system.

The UE 102 may perform upgrades, such as an operating system (OS) update. For example, the UE 102 receives a binary update file and decides to perform upgrade procedure at 0:00 in the night. It then starts a corresponding upgrade procedure at 0:00 in the night and becomes unreachable for the network side, e.g. is not reachable available for (for example) 5 minutes starting at 0:00. In particular, the UE 102 is not reachable by the Application Function 105.

Additionally, the detachment of the UE 102 due it becoming unavailable (and thus unreachable), followed by a re-registration and re-establishment of communication sessions cause a lot of signalling and has impacts e.g., on the UE 102, the AMF 101, the respective SMF 110, 112, the respective UPF 111, 113 and all applications running on the UE 102 using the communication network for communication.

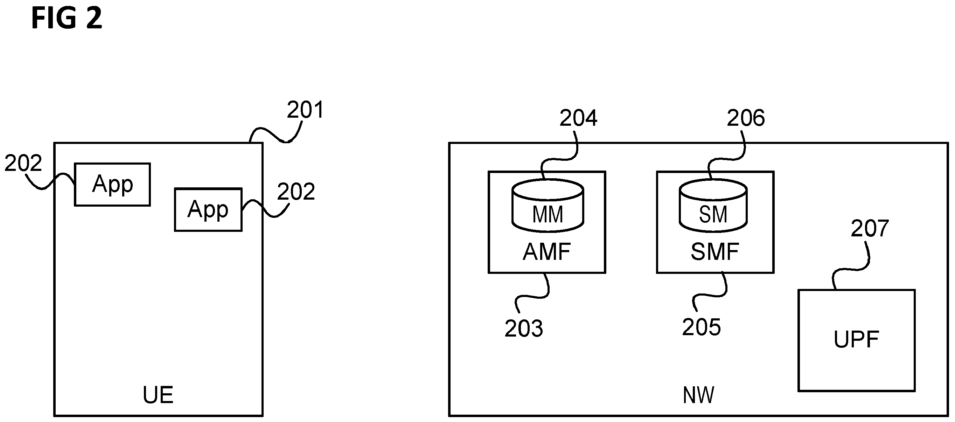

FIG. 2 illustrates components involved in a detachment of the UE.

A UE 201, e.g. corresponding to UE 102, runs applications 202 which use communication via the communication network. An AMF 203, e.g. corresponding to AMF 101, maintaining a mobility management (MM) context 204 for the UE 201. An SMF 205, e.g. corresponding to one of the SMFs 110, 112, maintains a session management (SM) context 206 for the UE 201 to provide one or more communication sessions for the UE 201 (used by the applications 202 for sending and receiving data).

Detaching the UE 201 includes resetting or deleting application sockets, deleting the MM context 204, deleting the SM context 206 and deleting a user plane context in a UPF 207 (e.g. corresponding to one of the UPFs 111, 113).

When the UE becomes again available, corresponding contexts need to be re-established, e.g. a registration procedure needs to be carried out (MM signalling), a PDU session establishment procedure needs to be carried out (SM signalling) and application signalling like IMS (IP Multimedia Subsystem) registration needs to be performed, leading to a high amount of signalling.

According to various embodiments, approaches are provided which allow avoiding this signalling effort in cases where it can be unnecessary because the UE is only unavailable temporarily, i.e. for a short time like a few minutes (e.g. for less than 5 minutes or for less than 10 minutes, e.g. in case of an update).

It should be noted that the approaches in the following may also be applied to the use case of manual PLMN selection: some UEs need to release their RRC (Radio Resource Control) connections (and MM context) since while searching the PLMN, the UEs are not unreachable. According to various embodiments, a UE may re-select a PLMN while the SM context does not need to be released (i.e. can be kept until the user selects another PLMN).

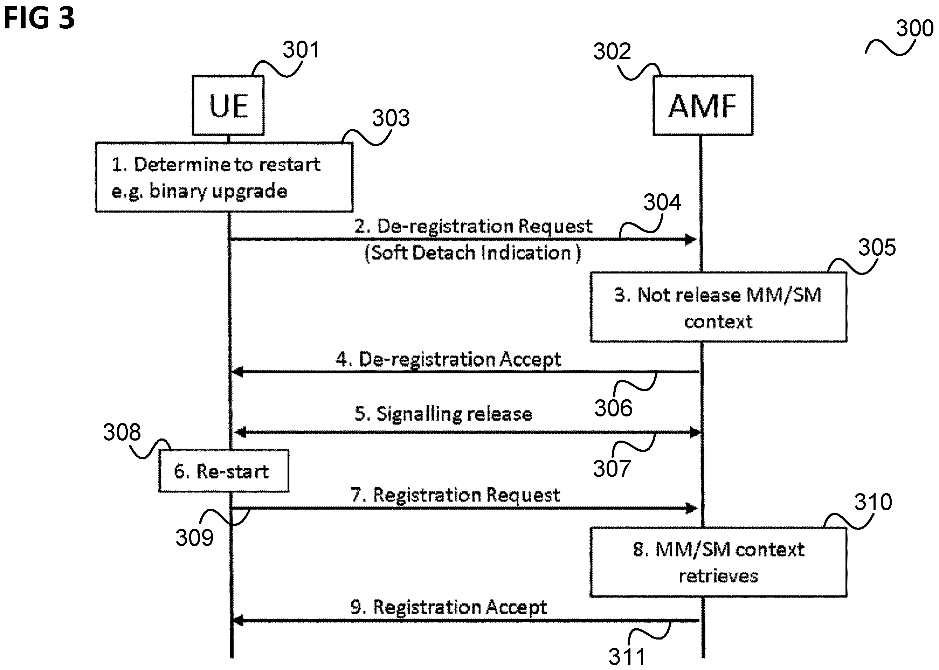

FIG. 3 shows a message flow diagram 300 illustrating a soft detach of a mobile terminal.

A UE 301 (e.g. corresponding to UE 102) and an AMF (e.g. corresponding to AMF 101) which serves the UE 301 are involved in the flow.

In 303, the UE 301 detects that it will become temporarily unavailable due to having to perform a data processing operation (which makes it unreachable by the network side), e.g. for restarting because of an update of the UE's operating system.

Therefore, in 304, the UE 301 sends a de-registration request to the AMF 302. The de-registration request includes an indication that the UE 301 is (or will soon be) temporarily unavailable, e.g. an indication of soft detach or an indication that it performs an OS update or an indication of temporary failure or an indication of manual PLMN selection, etc.

In response to the de-registration request including such an indication, the AMF 302 notes that the UE 301 is temporarily unavailable but keeps the MM and SM context of the UE in 305 (i.e. keeps them stored). For example, AMF 302 releases the Non-Access Stratum (NAS) with the UE 301, but the AMF 302 does not delete the context of the UE 301.

The AMF 302 responds with a de-registration accept message in 306.

The UE 301 and the AMF 302 then stop exchange of signalling information in 307.

The UE 301 then performs the data processing procedure due to which it is temporarily unavailable, e.g. re-starts.

In 309, after the restart, the UE 301 sends a registration request to the AMF 302 and the AMF 302 in 310 re-uses the MM context and SM context it has kept.

In 311, the AMF 302 sends a registration accept message to the UE 301 and sends the MM and/or SM context to the UE 301 e.g., in a dedicated container. Before sending the registration accept message, if a AMF 302 determines that it requires any context from another network function (e.g., from SMF 205), then the AMF 302 can retrieve the context (e.g., SM context) from the respective network function(s) (e.g., SMF).

Table 1 lists parameters of the MM context and the SM context that the AMF 302 may keep during the period during which the UE 301 is unreachable.

**Table 1**

| **Field** | **Description** |
|---|---|
| AUSF Group ID | The AUSF (Authentication Server Function) Group ID for the given UE. |
| UDM Group ID | The UDM Group ID for the UE. |
| PCF Group ID | The PCF Group ID for the UE. |
| UE Specific DRX Parameters | UE specific DRX (Discontinuous Reception) parameters for E-UTRA and NR (New Radio). |
| UE Specific DRX Parameters for NB-IoT | UE Specific DRX Parameters for NB-IoT |
| UE MM Network Capability | Indicates the UE MM network capabilities. |
| 5GMM Capability | Includes other UE capabilities related to 5GCN or interworking with EPS. |
| Events Subscription | List of the event subscriptions by other CP (Control Plane) NFs. |
| For the AM Policy Association: | |
| AM Policy Information | Information on AM policy provided by PCF. |
| PCF ID | The identifier of the PCF for AM Policy. In roaming, the identifier of V-PCF. |
| For the UE Policy Association: | |
| Trigger Information | The Policy Control Request Triggers on UE policy provided by PCF. |
| PCF ID(s) | The identifier of the PCF for UE Policy. In roaming, the identifiers of both V-PCF and H-PCF. |
| For the UE NWDAF association: | |
| NWDAF ID(s) | Indicating the NWDAF ID(s) (instance ID(s) or Set ID(s)) used for the UE specific Analytics. |
| Subscription Correlation ID(s) | Active UE-related analytics subscription(s) for each given NWDAF ID. |
| Analytic ID(s) | Analytic ID(s) per NWDAF ID. |
| Analytics specific data | Additional information on the Analytics ID(s) the AMF is subscribed related to the UE specific Analytics, i.e. per Analytics ID it contains the following parameters: Analytics Filter Information, Target of Analytics reporting, Analytics Reporting Info. |
| Other information | |
| Subscribed RFSP (RAT/Frequency Selection Priority) Index | An index to specific RRM (Radio Resource Management) configuration in the NG-RAN that is received from the UDM. |
| RFSP Index in Use | An index to specific RRM configuration in the NG-RAN that is currently in use. |
| UE-AMBR in serving network | The UE-AMBR (Aggregate Maximum Bit Rate) that has been sent to RAN (e.g. based on subscribed UE-AMBR from UDM or UE-AMBR received from PCF) |
| List of UE-Slice-MBR(s) | The list of UE-Slice-MBR if applicable. There is a single uplink and a single downlink value per S-NSSAI. |
| MICO Mode Indication | Indicates the MICO (Mobile Initiated Connection Only) Mode for the UE. |
| Extended idle mode DRX Parameters | Negotiated extended idle mode DRX (Discontinuous Reception) parameters. |
| Active Time Value for MICO mode | UE specific Active Time value allocated by AMF for MICO mode handling. |
| Strictly Periodic Registration Timer Indication | An indication that UE shall perform the Periodic Registration Update in a strictly periodic time. |
| Voice Support Match Indicator | An indication whether the UE radio capabilities are compatible with the network configuration. The AMF uses it as an input for setting the IMS voice over PS Session Supported Indication over 3GPP access. |
| Homogenous Support of IMS (IP Multimedia Subsystem) Voice over PS Sessions | Indicates per UE if "IMS Voice over PS Sessions" is homogeneously supported in all tracking areas (TAs) in the serving AMF or homogeneously not supported, or, support is non-homogeneous/unknown. |
| UE Radio Capability for Paging Information | Information used by the NG-RAN to enhance the paging towards the UE. |
| Information On Recommended Cells And RAN nodes For Paging | Information sent by the NG-RAN, and used by the AMF when paging the UE to help determining the NG-RAN nodes to be paged as well as to provide the information on recommended cells to each of these NG-RAN nodes, in order to optimize the probability of successful paging while minimizing the signalling load on the radio path. |
| UE Radio Capability Information | Information sent by the NG-RAN node and stored in the AMF. The AMF sends this information to the NG-RAN node within the UE context during transition to CM-CONNECTED state, except for NB-IoT when NB-IoT specific UE Radio Access Capability are sent instead. |
| UE Radio Capability ID | Pointer that uniquely identifies a set of UE Radio Capabilities in UCMF (UE Capability Management Function). |
| NB-IoT specific UE Radio Access Capability Information | NB-IoT specific UE radio access capabilities. |
| WUS Assistance Information | Assistance information for determining the WUS (wake-up signal) group. |
| SMSF Identifier | The Identifier of the SMSF serving the UE in RM-REGISTERED state. |
| SMSF Address | The Address of the SMSF (Short Message Service Function) serving the UE in RM-REGISTERED state.. |
| SMS Subscription | Indicates subscription to any SMS delivery service over NAS (Non-Access Stratum) irrespective of access type. |
| SEAF data | Master security information received from AUSF. |
| Last used EPS PLMN ID | The identifier of the last used EPS PLMN |
| Paging Assistance Data for CE capable UE | Paging Assistance Data for Enhanced Coverage level and cell ID provided by the last NG-RAN the UE was connected to. |
| Enhanced Coverage Restricted Information | Specifies per PLMN whether CE mode B is restricted for the UE, or both CE mode A and CE mode B are restricted for the UE, or both CE mode A and CE mode B are not restricted for the UE. |
| NB-IoT Enhanced Coverage Restricted Information | Specifies per PLMN whether the Enhanced Coverage is restricted or not for the UE. |
| Service Gap Time | Used to set the Service Gap timer for Service Gap Control (see clause 5.31.16 of TS 23.501 [2]). |
| Running Service Gap expiry time | The time of expiry of a currently running Service Gap Timer (see clause 5.31.16 of TS 23.501 [2]). |
| NB-IoT UE Priority | Numerical value used by the NG-RAN to prioritise between UEs accessing via NB-IoT. |
| List of Small Data Rate Control Statuses | List of Small Data Rate Control Statuses by DNN and S-NSSAI for the released PDU Sessions, see clause 5.31.14.3 of TS 23.501 [2]. |
| List of APN Rate Control Statuses | Indicates for each APN, the APN Rate Control Status (see clause 4.7.7.3 of TS 23.401 [13]) received from an MME when mobility from EPC to 5GC occurs. This information is provided to the MME during 5GC to EPC mobility. |
| UE positioning capability | Information sent by the LMF and stored in the AMF. The AMF sends this information along with the location request to the LMF. |
| For each access type level context within the UE access and mobility context: | |
| Access Type | Indicates the access type for this context. |
| RM State | Registration management state. |
| Registration Area | Current Registration Area (a set of tracking areas in TAI List). |
| TAI of last Registration | TAI of the TA in which the last Registration Request was initiated. |
| User Location Information | Information on user location. |
| Mobility Restrictions | Mobility Restrictions restrict mobility handling or service access of a UE. It consists of RAT restriction, Forbidden area, Service area restrictions and Core Network type restriction. It may also contain an Allowed CAG list and, optionally an indication whether the UE is only allowed to access 5GS via CAG cells. |
| Allowed NSSAI | Allowed NSSAI consisting of one or more S-NSSAIs for serving PLMN in the present Registration Area. |
| Mapping Of Allowed NSSAI | Mapping Of Allowed NSSAI is the mapping of each S-NSSAI of the Allowed NSSAI to the S-NSSAIs of the Subscribed S-NSSAIs. |
| S-NSSAIs subject to Network Slice-Specific Authentication and Authorization | Subscribed S-NSSAIs which are subject to NSSAA procedure. Also including the status, i.e. result, of the NSSAA if already executed or whether the S-NSSAI is pending the completion of an NSSAA procedure. |
| Inclusion of NSSAI in RRC Connection Establishment Allowed by HPLMN | it defines whether the UDM has indicated that the UE is allowed to include NSSAI in the RRC connection Establishment in clear text. |
| Access Stratum Connection Establishment NSSAI Inclusion Mode | Defines what NSSAI, if any, to include in the Access Stratum connection establishment. |
| CM state for UE connected via N3IWF/TNGF | Identifies the UE CM state (CM-IDLE, CM-CONNECTED) for UE connected via N3IWF/TNGF |
| N2 address information for N3IWF/TNGF | Identifies the N3IWF/TNGF to which UE is connected. Exists only if CM state for UE connected via N3IWF/TNGF is CM-CONNECTED. |
| AMF UE NGAP ID | Identifies the UE association over the NG interface within the AMF. This parameter exists only if CM state for the respective Access Type is CM-CONNECTED. |
| RAN UE NGAP ID | Identifies the UE association over the NG interface within the NG-RAN node. This parameter exists only if CM state for the respective Access Type is CM-CONNECTED. |
| Network Slice Instance(s) | The Network Slice Instances selected by 5GC for this UE. |
| URRP-AMF information | UE Reachability Request Parameter contains a list of URRP-AMF flags and associated authorised NF IDs. Each URRP-AMF flag indicates whether direct UE reachability notification has been authorised by the HPLMN towards the associated NF ID or not. |
| SoR Update Indicator for Initial Registration | An indication whether the UDM requests the AMF to retrieve SoR information when the UE performs NAS Registration Type "Initial Registration". |
| SoR Update Indicator for Emergency Registration | An indication whether the UDM requests the AMF to retrieve SoR information when the UE performs NAS Registration Type "Emergency Registration". |
| Charging Characteristics | |
| For each PDU Session level context: | |
| S-NSSAI(s) | The S-NSSAI(s) associated to the PDU Session. |
| DNN | The associated DNN for the PDU Session. |
| Network Slice Instance id | The network Slice Instance information for the PDU Session |
| PDU Session ID | The identifier of the PDU Session. |
| SMF Information | The associated SMF identifier and SMF address for the PDU Session. |
| Access Type | The current access type for this PDU Session. |
| EBI-ARP list | The allocated EBI and associated ARP pairs for this PDU session. |
| 5GSM Core Network Capability | The UEs 5GSM Core Network Capability. |
| SMF derived CN assisted RAN parameters tuning | These are PDU Session specific parameters received from the SMF and used by the AMF to derive the Core Network assisted RAN parameters tuning. |

It should be noted that in case the registration request sent in 309 is re-routed to a new AMF (other than the AMF 302), then the new AMF may get the last serving AMF's details from the UDM 104, so that the new AMF can extract the SM context from the (old) AMF 302.

Based on the policy in the AMF 302, the AMF 302 determine to store or buffer the downlink and uplink traffic for the UE 301. The AMF 302 information to release the N3 interface (e.g., AN release procedure) between RAN 103 and UPF 113, 111. In this case, UPF 113, 111 stores or buffers the UE 301 traffic/sessions and forwards back to the UE 301 after the registration procedure. Alternatively, AMF 302 can determine to store or buffer in the RAN 103, in this case, AMF 302 informs the RAN 103 by indicating to store or buffer the UE 301, 102 traffic/sessions. This indication to the RAN 103 can takes place during or after the de-registration procedure.

In case the 301 does not send the deregistration request in 304 it may, after having carried out the data processing procedure due to which it was temporarily unavailable (e.g. binary installation and restart) sends a registration request with an indication that it was temporarily unavailable, e.g. due to an update, i.e. for example a "Binary Update Indication".

The AMF may then perform a judgement about necessary actions and perform any required actions e.g., update the MM state, but may also keep information that it still has (i.e. may need to do little).

According to one embodiment, after the update, if there any changes in the UE's MM capability and SM capability, the UE 301 may send updated MM/SM capabilities to the AMF 302 in the Registration Request 309 (irrespective of whether it has sent a de-registration request). Based on the changes of the capabilities, the AMF 302 may perform a judgement about necessary actions and perform any required actions if any.

As mentioned above, besides the high signalling effort, temporal unavailability of a UE 102 may lead to the case that, during the unavailability period, an Application Function 105 is trying to reach the UE 102 and does not know the reason why the UE 102 is not reachable and is not aware how long it will not be available.

According to various embodiments, a mechanism is provided to let the AF 105 and thus a 3^{rd} party know that the UE 102 is temporarily unavailable. This may include the indication of a duration or a duration estimate for which long it is not reachable. The AF 105 or a 3^{rd} party application server may then react accordingly. For example, if the application is a messaging service the application server may buffer a message which cannot be sent and resend it after the indicated time i.e. schedule a downlink or uplink transmission of data based on the UE 102 reachability.

Such an indication of the UE being temporarily unavailable, possible including an indication of a duration, may for example be provided by the AMF 101 to the AF 105. In other words, while in the example of FIG. 3 the UE 301 has sent an indication to the AMF 101 that it is temporarily unreachable due to carrying out a predetermined data processing procedure, such an indication may also be transmitted between other components of the communication system, like an AMF 101 sending it to an AF 105. The AMF 101 may in that case also be the component which detects that the UE is temporarily available, e.g. because it has knowledge that the UE 301 needs to perform a data processing procedure that makes it unreachable (in which the AMF 101 may be involved). The AMF 101 may also have knowledge from the UE 301 that it will be temporarily unreachable.

The data processing procedure may for example be a registration and may include that the UE 102 needs to wait for a certain back-off period until it can re-register (e.g. in case of an update or also in other cases). In that case, the AMF 101 may inform the AF 105 about a duration corresponding to the (UE-based) back-off timer (which is typically known to it because the back-off timer is set by the network side). This for example allows a 3^{rd} party application server to decide when to re-send its application data.

The network side may determine the duration based on the back-off time set by the network (in case of a registration with back-off) or some other mechanism like information from an NWDAF (Network Data Analytics Function).

For example, an NWDAF provides an "UE Unreachable" statistics to the AMF 101 and/or directly to the AF 105. The AMF 101 and/or AF 105 may subscribe for UE Unreachable analytics with the NWDAF. The NWDAF for example collects the input data from the NFs (e.g., AMF, SMF, AF) and determines a prediction of the duration of UE unreachability (e.g. UE may not be available for 5mins at 00.00 hr) and provides the predicted duration to the consumers (e.g. AMF, AF). Alternatively, the NWDAF provides the statistical information to the AMF 101 and/or AF 105, based on this information, AMF 101 and/or AF 105 can determine the duration of UE unreachability.

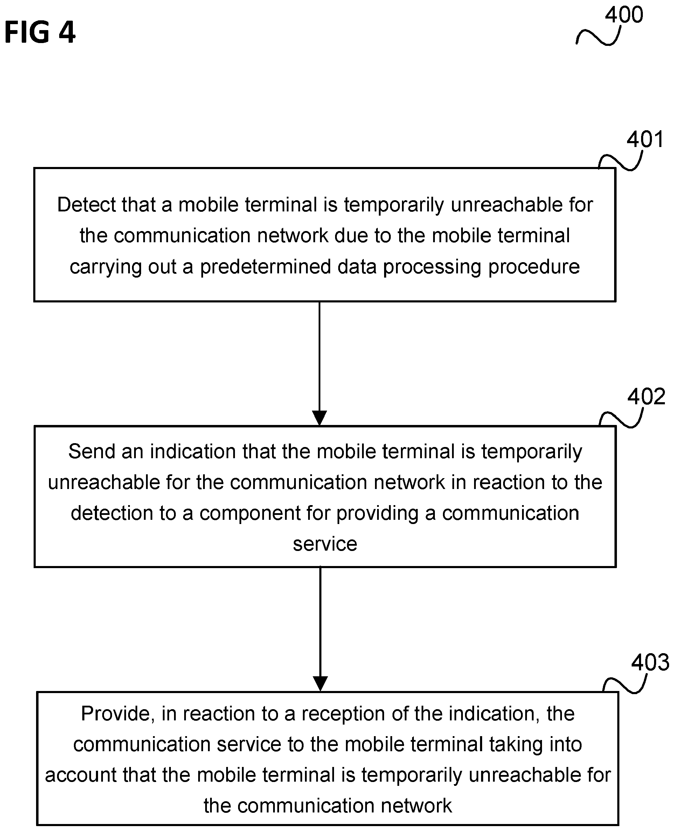

In summary, according to various embodiments, a method is provided as illustrated in FIG. 4.

FIG. 4 shows a flow diagram 400 illustrating a method for providing a communication service to a mobile terminal by a communication network.

In 401, it is detected that a mobile terminal is temporarily unreachable for the communication network due to the mobile terminal carrying out a predetermined data processing procedure.

In 402, in reaction to the detection, an indication is sent that the mobile terminal is temporarily unreachable for the communication network. The indication is sent to a component for providing a communication service.

In 403, in reaction to a reception of the indication, the communication service is provided to the mobile terminal taking into account that the mobile terminal is temporarily unreachable for the communication network.

According to various embodiments, in other words, when a mobile terminal becomes temporarily available because it performs a predetermined data processing procedure like an update or a re-registration (including waiting for a back-off period), a component which supports provision of a communication service is informed and can react accordingly.

The indication can be sent by the mobile terminal itself or by a network side component, in particular a network function like an AMF, a SMF, a PCF, a UDM, an NEF or an NWDAF. The indication may for example be sent to an application function.

For example, in case of indication sent to the SMF and it determines that it is needed to store the SM context, then the SMF notifies the AMF not to release the SM context of the mobile terminal. Based on the notification, the AMF keeps the context and performs the further actions e.g., de-registration of the mobile terminal. Similarly, the same mechanism is also applicable for other network functions like a PCF, a UDM and an NEF i.e., based on the indication and the policy, the network function can determine not to release the UE context (e.g., either SM or MM context or both) and notify the either a AMF and/or SMF for not to release the context.

The component for provision of the communication service may also be informed about the period during which the mobile terminal is not reachable for the communication network and/or a cause for the unavailability of the mobile terminal (because of which the mobile terminal is not reachable for the communication network).

For example, according to various embodiments, an application server is informed about the reason why a mobile terminal is not reachable and/or about how long the mobile terminal will (probably) not be reachable.

In the case of the indication being sent by the mobile terminal to the core network (e.g. AMF), the indication (e.g. in form of a message such as a soft de-registration message) can be seen as an indication to the core network that the MM context and/or SM context (e.g. one or more sessions established for the mobile terminal) can be at least partially kept.

For indicating the cause of the unavailability, the indication (e.g. a message indicating that the mobile terminal is not reachable) may include a specification of a cause value. For example, a core network component (e.g. AMF) may send a cause value to the AF (e.g. instead of a specification of the duration of the period during which the UE is not available). The UE may send the cause value (specifying a cause or reason, e.g. "OS update", "temporary failure", "manual PLMN selection", etc. for the unavailability) to the network component. The network component may then forward the cause value to the AF to indicate that the UE is unreachable because of the cause indicated by the cause value. Based on the cause value, the AF can determine the local time and retry after expiration. In addition, AF knows state of the mobile terminal. It could be the case that a core network component (e.g. AMF) may determine the cause value based on the local policy and/or UE provided information.

The indication that the mobile terminal is not reachable for the communication network may be an indication that the mobile terminal is not reachable for a core network of the radio communication system.

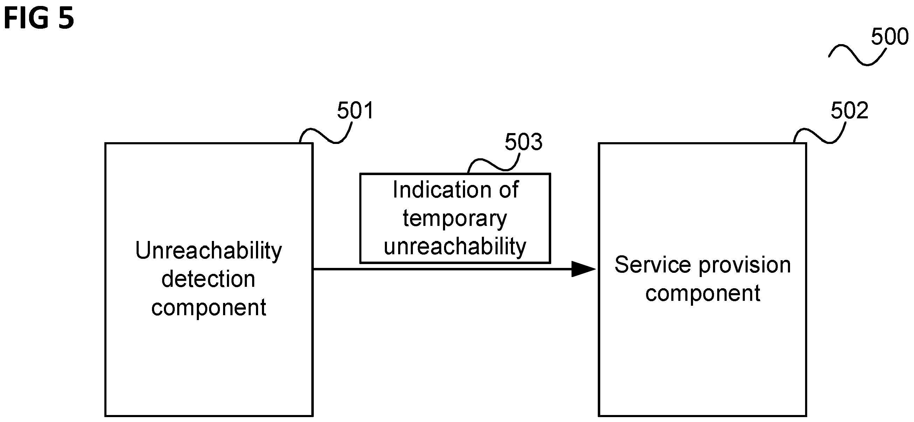

FIG. 5 shows a radio communication system 500 according to an embodiment.

The communication system 500 includes a first communication system component 501 configured to detect that a mobile terminal is temporarily unreachable (e.g. now or in the near future) for a communication network of the radio communication system due to the mobile terminal carrying out a predetermined data processing procedure and a second communication system component 502.

The first communication system component 501 is configured to send an indication 503 that the mobile terminal is temporarily unreachable for the communication network in reaction to the detection to the second communication system component 502.

The second communication system component 502 is configured to provide, in reaction to a reception of the indication, a communication service to the mobile terminal taking into account that the mobile terminal is temporarily unreachable for the communication network.

For example, according to various embodiments, one or more of the following are performed in a communication system:
- A UE determines that it will perform a soft restart and sends a corresponding NAS indication or AS indication via RAN to the AMF
- The AMF, based on the indication from the UE, does not release the UE context and does not notify SMF to release the session (or sessions) of the UE
- The AMF determines, based on a back-off timer (which causes the UE to be unreachable), an indication of a "unreachable time" and makes it available to the AF
- An NWDAF determines the analytics of the UE unavailability and delivers the output (e.g. unreachable prediction) to the consumers (AMF, AF).
- The AF, based on the indication of the "unreachable time", reschedules each downlink and/or uplink event which involves data transmission to the UE.

The method may be performed and the components of the communication network arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for providing a communication service to a mobile terminal by a communication network comprising:
Detecting that a mobile terminal is temporarily unreachable for the communication network due to the mobile terminal carrying out a predetermined data processing procedure;
Sending an indication that the mobile terminal is temporarily unreachable for the communication network in reaction to the detection to a component for providing a communication service; and
Providing, in reaction to a reception of the indication, the communication service to the mobile terminal taking into account that the mobile terminal is temporarily unreachable for the communication network.

2. The method of claim 1, wherein the indication is sent by the mobile terminal and the component for providing the communication service comprises one or more core network components of the communication network

3. The method of claim 2, wherein the core network component is an access and mobility management function and/or session management function and/or unified data management and/or policy control function and/or network exposure function and/or network data analytics function.

4. The method of claim 1, wherein the indication is sent by an access and mobility management function and/or network data analytics function and/or session management function and/or unified data management and/or policy control function and/or network exposure function of the communication network and the component for providing the communication service is an application function.

5. The method of any one of claims 1 to 4, wherein the indication includes the specification of a cause why the mobile terminal is temporarily unreachable for the communication network.

6. The method of any one of claims 1 to 5, wherein the indication includes the specification of a maximum duration for which the mobile terminal is unreachable for the communication network and wherein the communication service is provided to the mobile terminal taking into account the maximum duration.

7. The method of any one of claims 1 to 6, wherein the predetermined data processing procedure is a software update of the mobile terminal and/or public land mobile network selection and/or re-registration of the mobile terminal in the communication network.

8. The method of any one of claims 1 to 7, wherein the communication service comprises the provision of one or more communication sessions to the mobile terminal.

9. The method of claim 8, wherein providing a communication service to the mobile terminal taking into account that the mobile terminal is temporarily unreachable for the communication network comprises keeping one or more communication sessions established that have been established before the mobile terminal becomes temporarily unreachable and providing the kept one or more communication sessions to the mobile terminal when the mobile terminal is again reachable.

10. The method of any one of claims 1 to 9, wherein providing a communication service to the mobile terminal taking into account that the mobile terminal is temporarily unreachable for the communication network comprises initiating buffering downlink and/or uplink data until the mobile terminal is again reachable and initiating transmission of the buffered downlink and/or uplink data when the mobile terminal has again become reachable.

11. The method of any one of claims 1 to 10, wherein providing a communication service to the mobile terminal taking into account that the mobile terminal is temporarily unreachable for the communication network comprises keeping a mobility management context, a session management context or both of the mobile terminal.

12. The method of any one of claims 1 to 11, further comprising sending the mobility management context, session management context or both to the mobile terminal when the mobile terminal is again reachable for the communication network.

13. A radio communication system comprising:
a first communication system component configured to detect that a mobile terminal is temporarily unreachable for a communication network of the radio communication system due to the mobile terminal carrying out a predetermined data processing procedure; and
a second communication system component,
wherein the first communication system component is configured to send an indication that the mobile terminal is temporarily unreachable for the communication network in reaction to the detection to the second communication system component; and
the second communication system component is configured to provide, in reaction to a reception of the indication, a communication service to the mobile terminal taking into account that the mobile terminal is temporarily unreachable for the communication network.

14. The communication system of claim 13, wherein the first communication system component is the mobile terminal and the second communication system component is a component of a core network of the communication system.

15. The communication system of claim 13, wherein the first communication system component is an access and mobility management function and the second communication system component is an application function.

## Amended claims

### Amended claims in accordance with Rule 137(2) EPC.

1. A method for providing a communication service to a mobile terminal (201, 301, 501) by a communication network comprising:
Detecting that a mobile terminal (201, 301, 501) is temporarily unreachable for the communication network due to the mobile terminal (201, 301, 501) carrying out a predetermined data processing procedure;
Sending, by the mobile terminal (201, 301, 501), an indication (503) that the mobile terminal (201, 301, 501) is temporarily unreachable for the communication network in reaction to the detection to a core network component (203, 205, 302, 502) of the communication network for providing a communication service; and
Providing, in reaction to a reception of the indication (503), the communication service to the mobile terminal (201, 301, 501) taking into account that the mobile terminal (201, 301, 501) is temporarily unreachable for the communication network.

2. The method of claim 1, wherein the core network component (203, 205, 302, 502) is an access and mobility management function and/or session management function and/or unified data management and/or policy control function and/or network exposure function and/or network data analytics function.

3. The method of claim 1 or 2, wherein the indication (503) includes the specification of a cause why the mobile terminal (201, 301, 501) is temporarily unreachable for the communication network.

4. The method of any one of claims 1 to 3, wherein the indication (503) includes the specification of a maximum duration for which the mobile terminal (201, 301, 501) is unreachable for the communication network and wherein the communication service is provided to the mobile terminal (201, 301, 501) taking into account the maximum duration.

5. The method of any one of claims 1 to 4, wherein the predetermined data processing procedure is a software update of the mobile terminal (201, 301, 501) and/or public land mobile network selection and/or re-registration of the mobile terminal (201, 301, 501) in the communication network.

6. The method of any one of claims 1 to 5, wherein the communication service comprises the provision of one or more communication sessions to the mobile terminal (201, 301, 501).

7. The method of claim 6, wherein providing a communication service to the mobile terminal (201, 301, 501) taking into account that the mobile terminal (201, 301, 501) is temporarily unreachable for the communication network comprises keeping one or more communication sessions established that have been established before the mobile terminal (201, 301, 501) becomes temporarily unreachable and providing the kept one or more communication sessions to the mobile terminal (201, 301, 501) when the mobile terminal (201, 301, 501) is again reachable.

8. The method of any one of claims 1 to 7, wherein providing a communication service to the mobile terminal (201, 301, 501) taking into account that the mobile terminal (201, 301, 501) is temporarily unreachable for the communication network comprises initiating buffering downlink and/or uplink data until the mobile terminal (201, 301, 501) is again reachable and initiating transmission of the buffered downlink and/or uplink data when the mobile terminal (201, 301, 501) has again become reachable.

9. The method of any one of claims 1 to 8, wherein providing a communication service to the mobile terminal (201, 301, 501) taking into account that the mobile terminal (201, 301, 501) is temporarily unreachable for the communication network comprises keeping a mobility management context, a session management context or both of the mobile terminal (201, 301, 501).

10. The method of any one of claims 1 to 9, further comprising sending the mobility management context, session management context or both to the mobile terminal (201, 301, 501) when the mobile terminal (201, 301, 501) is again reachable for the communication network.

11. A radio communication system comprising:
a mobile terminal (201, 301, 501) configured to detect that the mobile terminal (201, 301, 501) is temporarily unreachable for a communication network of the radio communication system due to the mobile terminal (201, 301, 501) carrying out a predetermined data processing procedure; and
a core network component (203, 205, 302, 502) of the communication network, wherein the mobile terminal is configured to send an indication (503) that the mobile terminal (201, 301, 501) is temporarily unreachable for the communication network in reaction to the detection to the core network component (203, 205, 302, 502); and
the core network component (203, 205, 302, 502) is configured to provide, in reaction to a reception of the indication (503), a communication service to the mobile terminal (201, 301, 501) taking into account that the mobile terminal (201, 301, 501) is temporarily unreachable for the communication network.

12. The communication system of claim 11, wherein the core network component (502) is an application function.
